# EUROPEAN PATENT APPLICATION

(11) **EP 2 787 780 A1**
(43) Date of publication of application: **08.10.2014**
(21) Application number: 12867814.1
(22) Date of filing: 11.04.2012
(51) Int. Cl.: H04W 52/24

(54) **METHOD AND MOBILE TERMINAL FOR REGULATING SPECIFIC ABSORPTION RATE BY USING SENSOR**

(30) Priority: 09.02.2012 CN 201210029041
(71) Applicant: ZTE Corporation, Shenzhen, Guangdong 518057 (CN)
(72) Inventor: MA, Xiaoqiang, Shenzhen Guangdong 518057 (CN)
(74) Representative: Garratt, Peter Douglas
(86) International application number: PCT/CN2012/073809
(87) International publication number: WO 2013/117040

(57) **Abstract**

A method and a mobile terminal for regulating a Specific Absorption Rate (SAR) of electromagnetic wave energy based on a sensor are disclosed. According to whether a distance between a human body and the mobile terminal is within a preset distance range acquired through a proximity sensor and/or whether a bottom side face of the mobile terminal in the current position is a side face adjacent to a terminal antenna acquired through a gravity sensor, the mobile terminal regulates signal transmission power of the mobile terminal. In the technical scheme of the present document, the signal transmission power of the mobile terminal is controlled according to data of the sensors, thereby controlling the SAR of electromagnetic wave energy, solving the problem that an SAR value exceeding the standard affects the human body in the related art, and protecting the user of the mobile terminal in real time.

## Description

### Technical Field

The present document relates to the field of communication, and particularly, to a method and a mobile terminal for regulating a Specific Absorption Rate (SAR) of electromagnetic wave energy based on a sensor.

### Background of the Related Art

The mobile terminals (such as a cellphone and a panel personal computer) have become indispensable communication tools, but meanwhile, the radiation of the transmission power of the mobile terminals to the human body also receives attention from all the countries and organizations.

The SAR is generally referred as a specific absorption rate, it is a specific absorption rate of electromagnetic wave energy of the mobile terminal, which is electromagnetic power absorbed or consumed per unit mass of the human tissue, and the unit is W/kg or mW/mg. The requirements of the SAR under the Federal Communications Commission (FCC) authentication is extremely high, for example, when the diagonal size of complete machine is greater than 8 inch, the panel personal computer is required to test the other 5 planes besides a Liquid Crystal Display (LCD) plane. In the FCC provisions, with respect to all the mobile terminals, the SAR shall be less than 1.6mW/1g in a reasonable test method. In the related art, common technologies for reducing the SAR value include: selecting an antenna with low SAR, reducing the transmission power of the mobile terminal, or applying wave-absorbed layer on the surface of the shell of the mobile terminal or antenna and so on, even though the purpose of reducing the SAR can be achieved to some extent by the above methods, certain defects still exist. For example, antenna layout space is insufficient, a Total Radiated Power (TRP) value is reduced, and the communication quality of the mobile terminal is influenced and so on.

### Summary of the Invention

The technical problem required to be solved by the embodiment of the present document is to provide a method and a mobile terminal for regulating a specific absorption rate of electromagnetic wave energy based on a sensor, which improves the real-time performance of the mobile terminal controlling the specific absorption rate of electromagnetic wave energy.

In order to solve the above technical problem, the embodiment of the present document provides a method for regulating a specific absorption rate of electromagnetic wave energy based on a sensor, which comprises: according to whether a distance between a human body and a mobile terminal is within a preset distance range acquired through a proximity sensor and/or whether a bottom side face of the mobile terminal in a current position is a side face adjacent to a terminal antenna acquired through a gravity sensor, the mobile terminal regulating signal transmission power of the mobile terminal.

The above method can be further characterized in that:
when acquiring, through the proximity sensor, that the distance between the human body and the mobile terminal is within the preset distance range, the mobile terminal reduces the signal transmission power of the mobile terminal; and
when acquiring, through the proximity sensor, that the distance between the human body and the mobile terminal is not within the preset distance range, the mobile terminal increases the signal transmission power of the mobile terminal.

The above method can be further characterized in that:
when acquiring, through the gravity sensor, that the bottom side face of the mobile terminal in the current position is the side face adjacent to the terminal antenna, the mobile terminal reduces the signal transmission power of the mobile terminal; and
when acquiring, through the gravity sensor, that the bottom side face of the mobile terminal in the current position is not the side face adjacent to the terminal antenna, the mobile terminal increases the signal transmission power of the mobile terminal.

The above method can be further characterized in that:
when acquiring, through the proximity sensor, that the distance between the human body and the mobile terminal is within the preset distance range and acquiring, through the gravity sensor, that the bottom side face of the mobile terminal in the current position is the side face adjacent to the terminal antenna, the mobile terminal reduces the signal transmission power of the mobile terminal; and
when acquiring, through the proximity sensor, that the distance between the human body and the mobile terminal is not within the preset distance range or acquiring, through the gravity sensor, that the bottom side face of the mobile terminal in the current position is not the side face adjacent to the terminal antenna, the mobile terminal increases the signal transmission power of the mobile terminal.

The above method can be further characterized in that:
an identification of the bottom side face of the mobile terminal in the current position is determined through an image display direction of the mobile terminal.

In order to solve the above technical problem, the embodiment of the present document further provides a mobile terminal for regulating a specific absorption rate of electromagnetic wave energy based on a sensor, which comprises: a sensor data collecting module, a state monitoring module and a transmission power regulating module connected orderly; wherein,
the sensor data collecting module is configured to: collect data of a proximity sensor and/or data of a gravity sensor to report to the state monitoring module;
the state monitoring module is configured to: monitor data reporting of the sensor data collecting module, judge whether a distance between a human body and the mobile terminal is within a preset distance range according to the data of the proximity sensor and/or judge whether a bottom side face of the mobile terminal in a current position is a side face adjacent to a terminal antenna according to the data of the gravity sensor, and send a notification to the transmission power regulating module; and
the transmission power regulating module is configured to: regulate signal transmission power of the mobile terminal according to state information acquired from the state monitoring module.

The above mobile terminal can be further characterized in that:
the transmission power regulating module is configured to: when the distance between the human body and the mobile terminal is within the preset distance range, reduce the signal transmission power of the mobile terminal; and when the distance between the human body and the mobile terminal is not within the preset distance range, increase the signal transmission power of the mobile terminal.

The above mobile terminal can be further characterized in that:
the transmission power regulating module is configured to: when the bottom side face of the mobile terminal in the current position is the side face adjacent to the terminal antenna, reduce the signal transmission power of the mobile terminal; and when the bottom side face of the mobile terminal in the current position is not the side face adjacent to the terminal antenna, increase the signal transmission power of the mobile terminal.

The above mobile terminal can be further characterized in that:
the transmission power regulating module is configured to: when the distance between the human body and the mobile terminal is within the preset distance range and it is acquired through the gravity sensor that the bottom side face of the mobile terminal in the current position is the side face adjacent to the terminal antenna, reduce the signal transmission power of the mobile terminal; and when the distance between the human body and the mobile terminal is not within the preset distance range or it is acquired through the gravity sensor that the bottom side face of the mobile terminal in the current position is not the side face adjacent to the terminal antenna, increase the signal transmission power of the mobile terminal.

The above mobile terminal can be further characterized in that:
the state monitoring module is configured to: judge an image display direction of the mobile terminal through the data of the gravity sensor, so as to determine the bottom side face of the mobile terminal in the current position.

In the embodiment of the present document, the signal transmission power of the mobile terminal is controlled according to the data of the sensors, thereby controlling the specific absorption rate of electromagnetic wave energy, solving the problem that an SAR value exceeding the standard affects the human body in the related art, and protecting the user of the mobile terminal in real time.

### Brief Description of Drawings

FIG. 1 is a schematic diagram of an appearance of the mobile terminal in the embodiment of the present document.
FIG. 2 is a schematic diagram of a function module composition of the mobile terminal in the embodiment of the present document.
FIG. 3 is a schematic diagram of a position of the mobile terminal in the embodiment of the present document.
FIG. 4 is a schematic diagram of the method for regulating the specific absorption rate of electromagnetic wave energy based on the sensor in the specific embodiment.

### Preferred Embodiments of the Invention

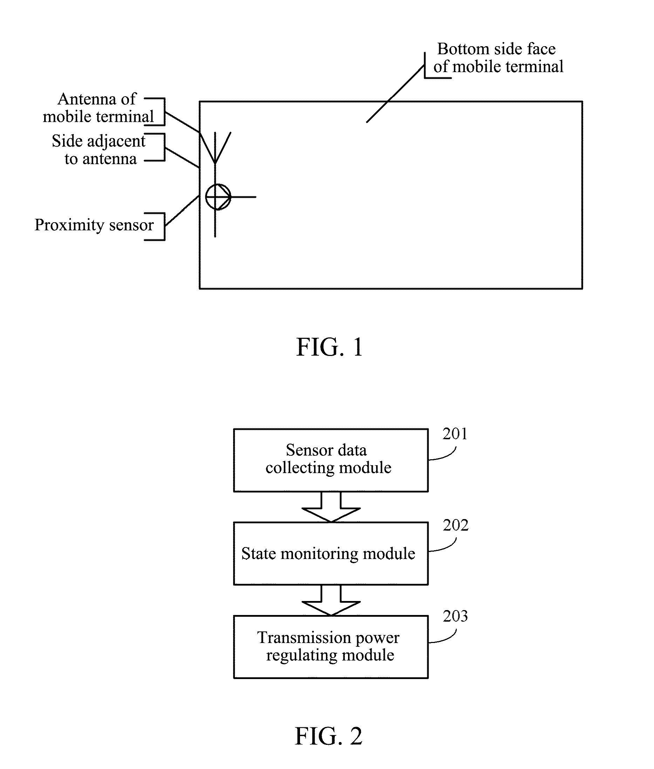

As shown in FIG. 1, a face where the display screen of the mobile terminal in the embodiment of the present document is located can be called a front face, the opposite of the face where the display screen is located is called a back face, and the other 4 faces are called side faces. An antenna is set on the mobile terminal, for example, the antenna is set on the back face of the terminal, a proximity sensor is also set on the mobile terminal, and the position of the proximity sensor can be set optionally, and it can be set at a certain distance from the antenna. A side face adjacent to the antenna refers to a side face closest to the antenna, and the number of side faces adjacent to the antenna can be one or two.

In the implementation, the layout of the antenna position is not limited to a certain side of the hardware circuit board, and an appropriate adjustment will be made according to the device screen size and the hardware circuit design, no matter how to design and distribute, a side face which needs an SAR value reaching the standard can be determined according to the antenna layout position.

The designer or manufacturer of the mobile terminal needs to confront the requirements of the certification authority on the SAR value over-standard test, and with the scheme, the transmission power of the mobile terminal is controlled through the data of the sensors, so as to control the SAR value, thereby protecting the human body.

As shown in FIG. 2, the mobile terminal for regulating the specific absorption rate of electromagnetic wave energy based on the sensor includes a sensor data collecting module 201, a state monitoring module 202 and a transmission power regulating module 203 connected orderly.

The sensor data collecting module 201 is configured to: collect data of the proximity sensor and/or data of the gravity sensor and make a report to the state monitoring module 202;
the state monitoring module 202 is configured to: monitor data reporting of the sensor data collecting module, judge whether a distance between the human body and the mobile terminal is within a preset distance range according to the data of the proximity sensor and/or judge whether a bottom side face of the mobile terminal in the current position is a side face adjacent to the terminal antenna according to the data of the gravity sensor, and send a notification to the transmission power regulating module 203; and
the transmission power regulating module 203 is configured to: regulate signal transmission power of the mobile terminal according to state information acquired from the state monitoring module 202.

Wherein, the data reported by the proximity sensor indicate distance>0 or distance<0, which respectively represent that the distance between the human body and the mobile terminal is not within the preset distance range and the distance between the human body and the mobile terminal is within the preset distance range. The sensor data collecting module 201 can define a distance flag bit, when the flag bit is 1, it is indicated that the distance between the human body and the mobile terminal is not within the preset distance range, and when the flag bit is 0, it is indicated that the distance between the human body and the mobile terminal is within the preset distance range.

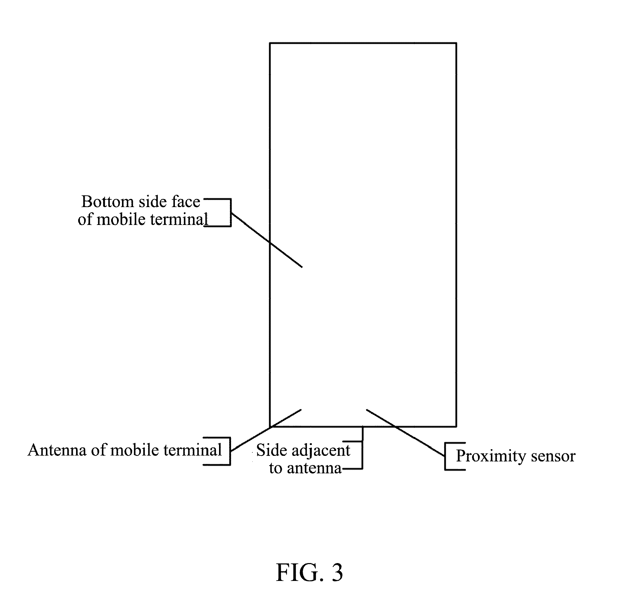

Wherein, the gravity sensor determines an image display direction of the terminal according to the gravity action when the mobile terminal is rotated, it can be defined as 4 directions, which are differentiated by four values of 0, 1, 2 and 3, no matter how to rotate the mobile terminal, the image display direction always converts among the four directions, and the sensor data collecting module 201 can use Rotation to define values of the four directions. The identification of the side face adjacent to the antenna can be one of these four direction values. As shown in FIG. 3, the identification of the side face adjacent to the antenna is 1, when the mobile terminal is rotated to the position shown in FIG. 3, a value of Rotation is 1, it can be believed that that side face adjacent to the antenna is closest to the user, and that side face is required to reduce the SAR value.

The state monitoring module 202 timely monitors the reporting of the sensor data, in order to regulate the signal transmission power dynamically, it not only depends on correctly reporting the sensor data, but also depends on timely and continuously monitoring the reported data. The state monitoring module 202 can register to monitor events, and it can monitor events in real time or monitor events timely. When data reported by the proximity sensor are changed, the data of the proximity sensor are monitored, and when the mobile terminal is rotated, the value of the image display direction in the rotation event is monitored.

Wherein, the transmission power regulating module 203 processes state data in the state monitoring module 202 to be a command required to be sent and then sends the command in a form of message, an operating parameter also can be defined, when it is required to reduce the transmission power, a value of the operating parameter is indicated as 1, and when it is required to increase the transmission power, the value of the operating parameter is indicated as 0.

The transmission power regulating module 203 can freely combine usages of the data of the above two sensors, when any one meets the condition or both the two meet the condition, a triggering condition of regulating the signal transmission power can be constituted.

It may have the following three forms specifically.

In the embodiment 1, when the distance between the human body and the mobile terminal is within the preset distance range, the transmission power regulating module 203 reduces the signal transmission power of the mobile terminal; and when the distance between the human body and the mobile terminal is not within the preset distance range, increases the signal transmission power of the mobile terminal.

In the embodiment 2, when the bottom side face of the mobile terminal in the current position is the side face adjacent to the terminal antenna, the transmission power regulating module 203 reduces the signal transmission power of the mobile terminal; and when the bottom side face of the mobile terminal in the current position is not the side face adjacent to the terminal antenna, increases the signal transmission power of the mobile terminal.

In the embodiment 3, when the distance between the human body and the mobile terminal is within the preset distance range and it is acquired through the gravity sensor that the bottom side face of the mobile terminal in the current position is the side face adjacent to the terminal antenna, the transmission power regulating module 203 reduces the signal transmission power of the mobile terminal; and when the distance between the human body and the mobile terminal is not within the preset distance range or it is acquired through the gravity sensor that the bottom side face of the mobile terminal in the current position is not the side face adjacent to the terminal antenna, increases the signal transmission power of the mobile terminal.

Wherein, the state monitoring module 202 can determine the image display direction of the mobile terminal through the data of the gravity sensor, so as to determine the bottom side face of the mobile terminal in the current position.

The method for regulating the specific absorption rate of electromagnetic wave energy based on the sensor includes: according to whether the distance between the human body and the mobile terminal is within the preset distance range acquired through the proximity sensor and/or whether the bottom side face of the mobile terminal in the current position is the side face adjacent to the terminal antenna acquired through the gravity sensor, the mobile terminal regulating the signal transmission power of the mobile terminal.

In the embodiment 1, when acquiring, through the proximity sensor, that the distance between the human body and the mobile terminal is within the preset distance range, the mobile terminal reduces the signal transmission power of the mobile terminal; and when acquiring, through the proximity sensor, that the distance between the human body and the mobile terminal is not within the preset distance range, the mobile terminal increases the signal transmission power of the mobile terminal.

In the embodiment 2, when acquiring through the gravity sensor that the bottom side face of the mobile terminal in the current position is the side face adjacent to the terminal antenna, the mobile terminal reduces the signal transmission power of the mobile terminal; and when acquiring through the gravity sensor that the bottom side face of the mobile terminal in the current position is not the side face adjacent to the terminal antenna, the mobile terminal increases the signal transmission power of the mobile terminal.

In the embodiment 3, when acquiring through the proximity sensor that the distance between the human body and the mobile terminal is within the preset distance range and acquiring through the gravity sensor that the bottom side face of the mobile terminal in the current position is the side face adjacent to the terminal antenna, the mobile terminal reduces the signal transmission power of the mobile terminal; and when acquiring through the proximity sensor that the distance between the human body and the mobile terminal is not within the preset distance range or acquiring through the gravity sensor that the bottom side face of the mobile terminal in the current position is not the side face adjacent to the terminal antenna, the mobile terminal increases the signal transmission power of the mobile terminal.

To illustrate, when the user holds the mobile terminal at the position shown in FIG. 3, it can be believed that the current short bottom side face of the mobile terminal is a side face closest to the user, and the side face is a side face adjacent to the antenna, the mobile terminal reduces the signal transmission power, thereby guaranteeing that the SAR value of the side face of the antenna reaches the standard.

### Specific embodiment

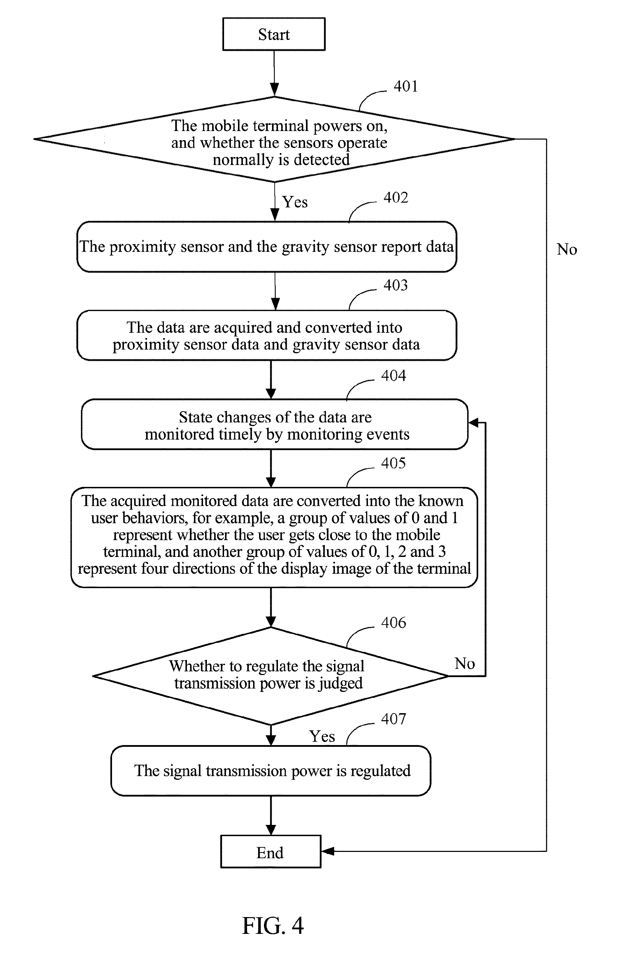

As shown in FIG. 4, the following steps are specifically included.

In step 401, the mobile terminal powers on, the system starts, whether the proximity sensor and the gravity sensor operate normally is detected, including software detection and hardware detection, if they operate normally, step 402 is executed, and if they operate abnormally, it is to quit the operation.

In step 402, the proximity sensor and the gravity sensor report data.

In step 403, the data reported by the proximity sensor and the gravity sensor are converted into user behavior data, such as proximity sensor data and gravity sensor data.

In step 404, state changes of the data are monitored in real time by monitoring events.

In step 405, the acquired monitored data are converted into the known user behaviors, for example, a group of values of 0 and 1 represent whether the user gets close to the mobile terminal, and another group of values of 0, 1, 2 and 3 represent four directions of the display image of the terminal.

In step 406, whether to regulate the signal transmission power is judged, if yes, step 407 is executed, and if no, it is to return to step 404.

In step 407, the signal transmission power is regulated.

The opportunity of regulating the signal transmission power can be a timing regulation set by the system, that is, the situations of the data of the proximity sensor and the gravity sensor are judged in each regulation moment, if the condition is satisfied, regulation is performed, and if the condition is not satisfied, no regulation is performed. The opportunity of regulating the signal transmission power can be set according to the situations of the data of the proximity sensor and the gravity sensor, for example, when the terminal is rotated, that is, when the data of the proximity sensor are changed or when the data of the gravity sensor are changed, the situations of the data of the proximity sensor and the gravity sensor are judged, if the condition is satisfied, regulation is performed, and if the condition is not satisfied, no regulation is performed.

It should be noted that the embodiments in the present document and the characteristics in the embodiments can be optionally combined with each other in a case of no conflict.

Certainly, the present document can still have other various embodiments, the skilled familiar with the art can make various corresponding changes and transformations according to the embodiments of the present document without departing from the spirit and essence of the present document, and these corresponding changes and transformations shall all fall into the protection scope of the appended claims of the present document.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above embodiments also can be implemented by using one or multiple integrated circuits. Correspondingly, each module/unit in the above embodiments can be implemented in a form of hardware, and also can be implemented in a form of software function module. The present document is not limited to any combination of hardware and software in a specific form.

### Industrial Applicability

In the embodiments of the present document, the signal transmission power of the mobile terminal is controlled according to the data of the sensors, thereby controlling the specific absorption rate of electromagnetic wave energy, solving the problem that an SAR value exceeding the standard affects the human body in the related art, and protecting the user of the mobile terminal in real time.

## Claims

1. A method for regulating a specific absorption rate of electromagnetic wave energy based on a sensor, comprising:
according to whether a distance between a human body and a mobile terminal is within a preset distance range acquired through a proximity sensor and/or whether a bottom side face of the mobile terminal in a current position is a side face adjacent to a terminal antenna acquired through a gravity sensor, the mobile terminal regulating signal transmission power of the mobile terminal.

2. The method according to claim 1, wherein, the step of regulating signal transmission power of the mobile terminal comprises:
when acquiring, through the proximity sensor, that the distance between the human body and the mobile terminal is within the preset distance range, the mobile terminal reducing the signal transmission power of the mobile terminal; and
when acquiring, through the proximity sensor, that the distance between the human body and the mobile terminal is not within the preset distance range, the mobile terminal increasing the signal transmission power of the mobile terminal.

3. The method according to claim 1, wherein, the step of regulating signal transmission power of the mobile terminal comprises:
when acquiring, through the gravity sensor, that the bottom side face of the mobile terminal in the current position is the side face adjacent to the terminal antenna, the mobile terminal reducing the signal transmission power of the mobile terminal; and
when acquiring, through the gravity sensor, that the bottom side face of the mobile terminal in the current position is not the side face adjacent to the terminal antenna, the mobile terminal increasing the signal transmission power of the mobile terminal.

4. The method according to claim 1, wherein, the step of regulating signal transmission power of the mobile terminal comprises:
when acquiring, through the proximity sensor, that the distance between the human body and the mobile terminal is within the preset distance range and acquiring, through the gravity sensor, that the bottom side face of the mobile terminal in the current position is the side face adjacent to the terminal antenna, the mobile terminal reducing the signal transmission power of the mobile terminal; and
when acquiring, through the proximity sensor, that the distance between the human body and the mobile terminal is not within the preset distance range or acquiring, through the gravity sensor, that the bottom side face of the mobile terminal in the current position is not the side face adjacent to the terminal antenna, the mobile terminal increasing the signal transmission power of the mobile terminal.

5. The method according to claim 1, wherein, an identification of the bottom side face of the mobile terminal in the current position is determined through an image display direction of the mobile terminal.

6. A mobile terminal for regulating a specific absorption rate of electromagnetic wave energy based on a sensor, comprising: a sensor data collecting module, a state monitoring module and a transmission power regulating module connected orderly; wherein,
the sensor data collecting module is configured to: collect data of a proximity sensor and/or data of a gravity sensor to report to the state monitoring module;
the state monitoring module is configured to: monitor data reporting of the sensor data collecting module, judge whether a distance between a human body and the mobile terminal is within a preset distance range according to the data of the proximity sensor and/or judge whether a bottom side face of the mobile terminal in a current position is a side face adjacent to a terminal antenna according to the data of the gravity sensor, and send a notification to the transmission power regulating module; and
the transmission power regulating module is configured to: regulate signal transmission power of the mobile terminal according to state information acquired from the state monitoring module.

7. The mobile terminal according to claim 6, wherein,
the transmission power regulating module is configured to: when the distance between the human body and the mobile terminal is within the preset distance range, reduce the signal transmission power of the mobile terminal; and when the distance between the human body and the mobile terminal is not within the preset distance range, increase the signal transmission power of the mobile terminal.

8. The mobile terminal according to claim 6, wherein,
the transmission power regulating module is configured to: when the bottom side face of the mobile terminal in the current position is the side face adjacent to the terminal antenna, reduce the signal transmission power of the mobile terminal; and when the bottom side face of the mobile terminal in the current position is not the side face adjacent to the terminal antenna, increase the signal transmission power of the mobile terminal.

9. The mobile terminal according to claim 6, wherein,
the transmission power regulating module is configured to: when the distance between the human body and the mobile terminal is within the preset distance range and it is acquired through the gravity sensor that the bottom side face of the mobile terminal in the current position is the side face adjacent to the terminal antenna, reduce the signal transmission power of the mobile terminal; and when the distance between the human body and the mobile terminal is not within the preset distance range or it is acquired through the gravity sensor that the bottom side face of the mobile terminal in the current position is not the side face adjacent to the terminal antenna, increase the signal transmission power of the mobile terminal.

10. The mobile terminal according to claim 6, wherein,
the state monitoring module is configured to: judge an image display direction of the mobile terminal through the data of the gravity sensor, so as to determine the bottom side face of the mobile terminal in the current position.
